# FASCICULE DE BREVET EUROPEEN

(11) **EP 0 433 168 B1**
(45) Date de publication et mention de la délivrance du brevet: **10.11.1993**
(21) Numéro de dépôt: 90403541.7
(22) Date de dépôt: 12.12.1990
(51) Int. Cl.: F01D 25/24, F04D 29/52, F02K 1/80

(54) **Carter de turbomachine à retention axiale renforcée**
Turbomaschinengehäuse mit verstärkter axialer Verriegelung
Turbomachine casing with reinforced axial retention

(30) Priorité: 13.12.1989 FR 8916451
(43) Date de publication de la demande: 19.06.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Catte, Philippe Patrick, F-94430 Chennevieres (FR); Naudet, Jacky, F-91000 Evry (FR)
(74) Mandataire: Moinat, François

(56) Documents cités:
- CH-A- 273 204
- GB-A- 2 068 270

## Description

La présente invention concerne les carters des turbomachines d'aviation et plus particulièrement les moyens d'assemblage entre elles des viroles formant les carters.

Généralement les carters de turbomachines sont formés de viroles soit circulaires, soit semi-circulaires assemblées entre elles au moyen de bride d'assemblage externes aux carters et orientées radialement. Les faces des brides en contact comportent des orifices régulièrement espacés destinés aux passages de vis ou de boulons d'assemblage, voir par example CH-A-273204.

Les épaisseurs des brides et le diamètre des vis ou des boulons sont calculés en fonction des efforts axiaux subis par les carters et suivant des normes précises établies pour chaque type de moteur.

De nouveaux types de turbomachines ont vu le jour récemment, comme les turboréacteurs à hélices rapides comportant un générateur de gaz entraînant des turbines libres contrarotatives, elles-mêmes, entraînant des hélices contrarotatives, propulsives ou tractrices.

Les normes de calcul de résistance des carters de tels moteurs doivent prendre en compte tout type d'évènement pouvant survenir à ceux-ci afin de leur assurer une résistance suffisante pour pallier tout risque de destruction accidentelle du moteur.

Un des évènements de très faible probalité, mais qui ne doit pas être masqué, est la perte ou la rupture des pales d'hélice. Cette rupture exceptionnelle pourrait être occasionnée par exemple par la projection dans le doublet d'hélices, d'un objet appartenant à l'avion (porte, morceaux de pneumatiques, etc...) au décollage ou en vol.

Dans un tel cas la rupture des pales d'hélice entraînerait sur les brides de liaison des viroles de carter des efforts de l'ordre de 50 tonnes. Si l'on devait dimensionner l'épaisseur des brides et les diamètres des vis d'assemblage pour supporter de tels efforts, on entrainerait une augmentation de masse et d'encombrement radial considérable de la turbomachine, ce qui est incompatible avec les exigences traditionnellement sévères de faible encombrement et de légéreté des turboréacteurs.

La présente invention a donc pour but de proposer une nouvelle configuration des brides de carter aptes à supporter axialement des efforts exceptionnellement très importants sans augmenter la masse et l'encombrement de la turbomachine.

L'invention a donc pour objet un carter de turbomachine formé de viroles successives solidarisées entre elles de l'amont vers l'aval par des brides de liaison vissées dans lequel une des viroles au moins comporte un moyen mécanique complémentaire de rétention axiale apte à faire supporter à la liaison des viroles entre elles des efforts mécaniques exceptionnels tels que ceux engendrés par la perte d'une hélice de la turbomachine.

Selon une caractéristique de l'invention, le moyen de rétention axiale est constitué par une languette circulaire portée par la bride de liaison d'une des viroles à assembler et radialement tournée, ladite languette coopérant avec une gorge circulaire ouverte radialement vers l'extérieur et portée par un élément solidaire de la seconde virole à assembler.

Dans un mode de réalisation de l'invention, l'élément solidaire de la seconde virole et qui porte la gorge pourra être constituée par l'extrémité de ladite seconde virole elle-même tandis que dans un second mode de réalisation l'élément qui porte la gorge pourra être une bride intermédiaire vissée entre les brides des deux viroles à assembler tandis que ladite bride intermédiaire comportera deux gorges radialement ouvertes vers l'extérieur chacune desdites gorges coopérant avec une languette circulaire portée par chacune des viroles à assembler.

D'autres caractéristiques de l'invention seront explicitées ainsi que des variantes de réalisation dans le complément de description qui va suivre accompagné de planches de dessins parmi lesquelles:
- la figure 1 est une vue en demi-coupe longitudinale partielle d'un compresseur de turbomachine dont le carter comporte le moyen de rétention axiale selon l'invention appliquée à la partie amont du carter de compresseur.
- la figure 2 est un schéma de la liaison des viroles de carter en fonctionnement sous une contrainte normale.
- la figure 3 est un schéma similaire à celui de la figure 2, en fonctionnement sous une contrainte axiale exceptionnelle.
- la figure 4 montre une variante de réalisation dans laquelle une bride intermédiaire coopère avec deux viroles de carter à assembler.
- la figure 5 est une variante de réalisation de la figure 1, appliquée à la liaison entre la partie aval d'un carter de compresseur et du carter de chambre de combustion.
- la figure 6 montre une vue partielle de bout d'une bride de carter circulaire dont la languette interne comporte des embrèvements propres à permettre l'engagement de la languette correspondante de la seconde virole à assembler.

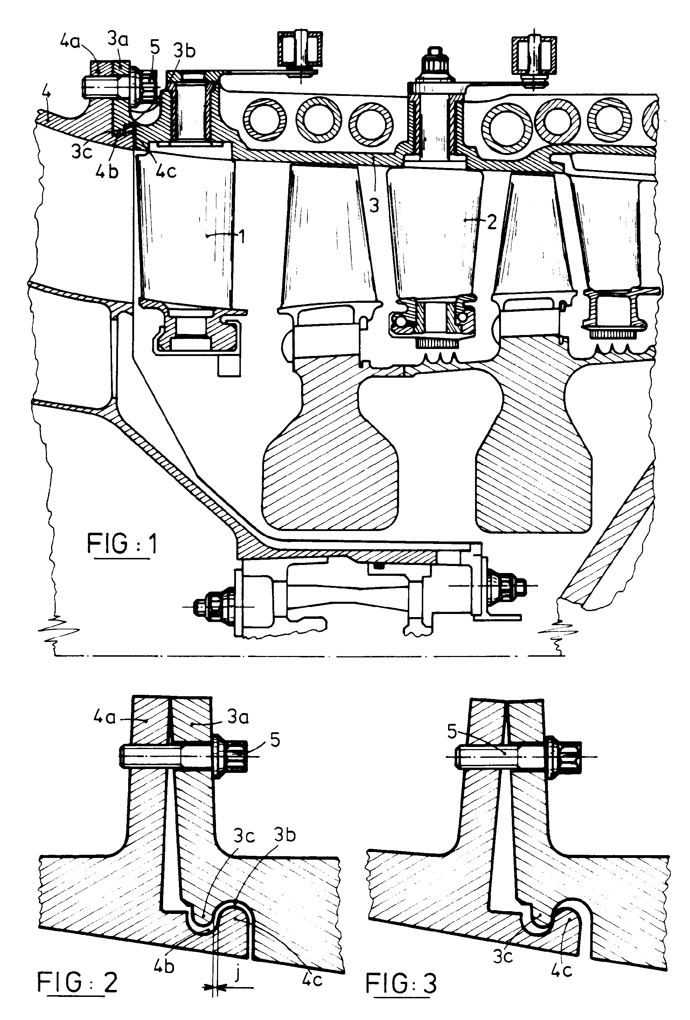

A la figure 1 est représenté en demi-coupe longitudinale partielle un compresseur haute pression de turbomachine dont les deux premiers étages 1,2 de stator, à calage variable sont disposés dans un carter de compresseur 3. Celui-ci est formé de deux viroles semi-circulaires 3 fixées en amont sur un carter 4 de compresseur basse pression ou sur un carter intermédiaire.

La fixation des viroles 3 sur le carter 4 se fait au moyen de brides circulaires s'étendant radialement à l'extérieur des carters, l'une 4a, à l'aval du carter 4 et l'autre 3a, à l'amont de la virole 3 les deux brides 3a et 4a étant solidarisées par des boulons 5.

Sur sa circonférence externe et en aval de la bride 4a, le carter 4 comporte une gorge circulaire 4b ouverte radialement vers l'extérieur et délimitée à l'aval par une portée circulaire 4c.

La virole 3 du carter du compresseur haute pression comporte quant à elle au droit de sa bride amont 3a une languette 3c tournée radialement vers l'intérieur et suivie en aval d'une gorge circulaire interne 3b.

Au montage lorsqu'on vient positionner la virole semi-circulaire 3 du carter de compresseur HP sur le carter 4 les languettes 3c, et 4c viennent se positionner dans les gorges resp. 4b et 3b de la virole en regard assurant ainsi un moyen de rétention axial mutuel pour les deux éléments de carter 3 et 4 lorsqu'ils sont soumis à des contraintes exceptionnelles.

En effet, et en regard des figures 2 et 3 on peut constater que la languette 4c a une épaisseur plus faible que la largeur de la gorge 4b qui le reçoit. Ainsi, un jeu "j" axial existe entre la languette et la gorge de façon à ce que, lorsque le carter est soumis à des contraintes normales, cas de la figure 2, le bord aval de la languette 3c ne vienne pas en contact avec le bord de la portée 4c : les efforts axiaux sont alors repris seulement par les vis 5.

A l'inverse dans le cas de la figure 3 où l'assemblage est soumis à un effort axial exceptionnel du type de celui engendré par une perte d'hélice par le moteur, la languette circulaire 3c vient s'appuyer contre l'épaulement 4c et assure la rétention axiale en complément du maintien assuré par les boulons 5, cet effet de crochet assurant la reprise de la majeure partie des efforts subis par l'assemblage.

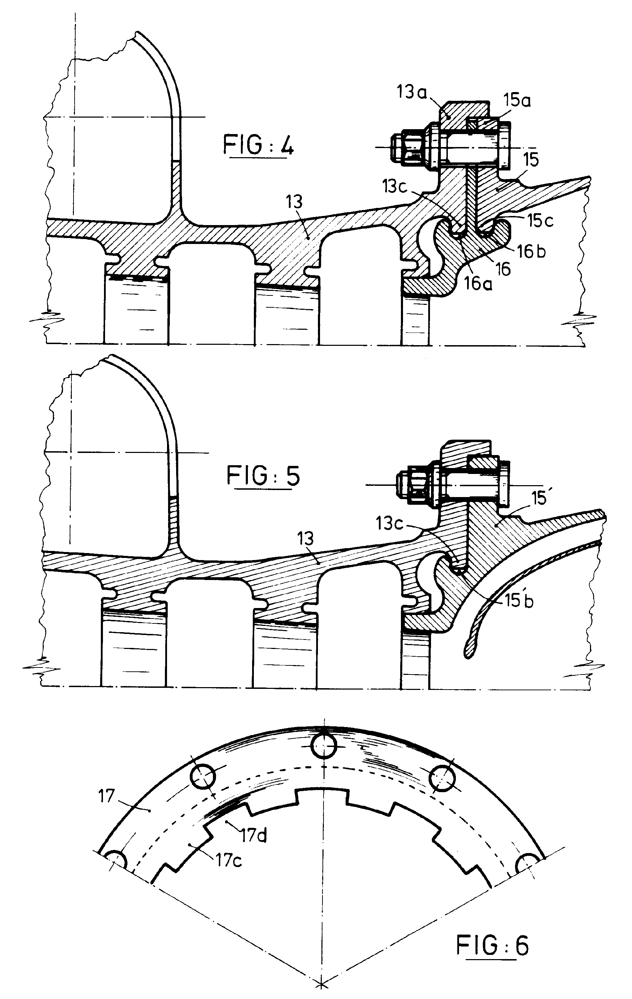

La figure 4 montre une variante de réalisation de l'assemblage appliquée à la solidarisation d'un carter de compresseur haute pression 13 avec un carter de chambre de combustion 15.

Dans ce mode de réalisation, une bride intermédiaire 16 est intercalée entre les brides aval 13a du carter de compresseur et amont 15a du carter de chambre. Les carters 13 et 15 comportent chacun une languette radialement interne 13c, 15c tandis que la bride intermédiaire comporte deux rainures circulaires 16a, 16b recevant chacune une des languettes circulaires resp. 13c et 15c, l'assemblage assurant ainsi la rétention axiale de la liaison des carters.

Dans la variante de la figure 5 appliquée à la même liaison entre un carter de compresseur haute pression 13 et un carter de chambre de combustion 15', le carter 13 est inchangé mais c'est le carter de chambre 15' qui comporte à l'amont une gorge circulaire 15'b.

Les trois types d'assemblages présentés aux figures 1, 4 et 5 sont utilisables quant le carter de compresseur est réalisé sous forme de deux viroles semi-circulaires.

Dans le cas où celui-ci est une virole circulaire monobloc, il est nécessaire que les gorges et les languettes comportent des embrèvements aptes à permettre l'engagement axial de chaque languette dans la gorge correspondante et par rotation d'une virole sur l'autre avant vissage des brides entre elles à permettre la mise en place de chaque languette hors de l'embrèvement d'introduction de la gorge correspondante.

C'est ce que schématise la figure 6 montrant en vue de bout une bride de liaison 17 dont la languette interne 17c comporte des embrèvements 17d qui permettront l'engagement de la seconde virole à assembler, non représentée ici.

La présente invention permet donc de résoudre ce problème technique sans surdimensionner les brides ni les boulons de fixation et donc sans surcharge de masse prohibitive.

## Revendications

1. Carter de turbomachine formé de viroles successives solidarisées entre elles de l'amont vers l'aval par des brides de liaison vissées caractérisé en ce qu'une des viroles au moins comporte un moyen mécanique complémentaire de rétention axiale apte à faire supporter à la liaison des viroles entre elles des efforts mécaniques exceptionnels tels que ceux engendrés par la perte d'une hélice de la turbomachine.

2. Carter selon la revendication 1, caractérisé en ce que ledit moyen est constitué par une languette (3c, 13c, 15c) circulaire portée par la bride de liaison d'une des viroles à assembler et radialement tournée vers l'intérieur, ladite languette coopérant avec une gorge circulaire (4b, 15b, 16a, 16b) ouverte radialement vers l'extérieur et portée par un élément solidaire de la seconde virole à assembler.

3. Carter selon la revendication 2, caractérisé en ce que l'élément solidaire de la seconde virole et qui porte la gorge est constitué par l'extrémité de ladite seconde virole elle-même.

4. Carter selon la revendication 2, caractérisé en ce que l'élément qui porte la gorge est une bride intermédiaire (16) vissée entre les brides (13a, 15a) des deux viroles à assembler et en ce que ladite bride intermédiaire comporte deux gorges (16a, 16b) radialement ouvertes vers l'extérieur chacune desdites gorges coopérant avec une languette circulaire (13c, 15c) portée par chacune des viroles (13, 15) à assembler.

5. Carter de turbomachine selon l'une quelconque des revendications 1 à 4 caractérisé en ce que les viroles à assembler sont semi-circulaires et que les gorges et languettes sont elles-mêmes semi-circulaires.

6. Carter de turbomachine selon l'une quelconque des revendications 1 à 4 dont les viroles sont circulaires caractérisé en ce que les gorges et les languettes (17c) comportent des embrèvements (17d) aptes à permettre l'engagement axial de chaque languette dans la gorge correspondante et par rotation d'une virole sur l'autre avant vissage des brides entre elles à permettre la mise en place de chaque languette hors de l'embrèvement d'introduction de la gorge correspondante.

## Claims

1. Turbine machine casing formed by successive shrouds joined together from upstream to downstream by screwed connection flanges characterised in that one of the shrouds at least includes a complementary mechanical axial retention means capable of making the connection of shrouds withstand exceptional mechanical loads such as those generated by the loss of a propeller of the turbine machine.

2. Casing according to Claim 1, characterised in that the said means is made up of a circular tab (3c, 13c, 15c) carried by the connection flange of one of the shrouds to be assembled, and pointing radially inwards, the said tab interacting with a circular groove (4b, 15b, 16a, 16b) open radially outwards and carried by an element secured to the second shroud to be assembled.

3. Casing according to Claim 2, characterised in that the element secured to the second shroud and which carries the groove is made up by the end of the said second shroud itself.

4. Casing according to Claim 2, characterised in that the element which carries the groove is an intermediate flange (16) screwed between the flanges (13a, 15a) of the two shrouds to be assembled and in that the said intermediate flange includes two grooves (16a, 16b) open radially outwards, each of the said grooves interacting with a circular tab (13c, 15c) carried by each of the shrouds (13, 15) to be assembled.

5. Turbine machine casing according to any one of Claims 1 to 4, characterised in that the shrouds to be assembled are semicircular and in that the grooves and tabs are themselves semicircular.

6. Turbine machine casing according to any one of Claims 1 to 4 in which the shrouds are circular, characterised in that the grooves and the tabs (17c) include recesses (17d) capable of allowing the axial engagement of each tab into the corresponding groove and, by rotating one shroud on the other before screwing the flanges together, of allowing each tab to be positioned out of the insertion recess of the corresponding groove.

## Patentansprüche

1. Turbomaschinengehäuse, bestehend aus von der stromabwärtigen zur stromabwärtigen Seite aufeinanderfolgenden Ringen, die durch verschraubte Verbindungsflansche fest miteinander verbunden sind, **dadurch gekennzeichnet,** daß wenigstens einer der Ringe ein zusätzliches mechanisches Mittel zur axialen Halterung aufweist, durch das die gegenseitige Verbindung der Ringe in die Lage versetzt ist, außergewöhnliche mechanische Kräfte aufzunehmen, wie sie beispielsweise bei dem Verlust eines Propellerblatts der Turbomaschine auftreten.

2. Gehäuse nach Anspruch 1, dadurch gekennzeichnet, daß das genannte Mittel aus einer von dem Verbindungsflansch eines der zusammenzufügenden Ringe getragenen, radial nach innen weisenden kreisförmigen Zunge (3s, 13c, 15c) besteht, die mit einer kreisförmigen Kehle (4b, 15b, 16a, 16b) zusammenwirkt, die radial nach außen offen ist und von einem Element getragen wird, das mit dem zweiten der zusammenzufügenden Ringe fest verbunden ist.

3. Gehäuse nach Anspruch 2, dadurch gekennzeichnet, daß das Element, das mit dem zweiten Ring fest verbunden ist und die Kehle aufweist, aus dem Endbereich des zweiten Ringes selbst besteht.

4. Gehäuse nach Anspruch 2, dadurch gekennzeichnet, daß das Element, das die Kehle trägt, ein Zwischenflansch (16) ist, der zwischen die Flansche (13a, 15a) der beiden zusammenzufügenden Ringe geschraubt ist, und daß dieser Zwischenflansch zwei radial nach außen offene Kehlen (16a, 16b) aufweist, von denen jede mit einer kreisförmigen Zunge (13c, 15c) zusammenwirkt, die jeweils von einem von der zusammenzufügenden Ringe (13, 15) getragen sind.

5. Gehäuse nach einem der Ansprüche 1 bis 4. dadurch gekennzeichnet, daß die zusammenzufügenden Ringe halbkreisförmig ausgebildet sind und daß die Kehlen und die Zungen ebenfalls halbkreisförmig ausgebildet sind.

6. Gehäuse nach einem der Ansprüche 1 bis 4 mit kreisförmigen Ringen, dadurch gekennzeichnet, daß die Kehlen und die Zungen (17c) Versatzbereiche (17d) aufweisen, die das axiale Einbringen der einzelnen Zungen in die betreffende Kehle ermöglichen und vor dem gegenseitigen Verschrauben der Flansche durch Drehen eines Ringes auf dem anderen Ring die Plazierung der einzelnen Zungen außerhalb der Einführungs-Versatz bereiche der betreffenden Kehle erlauben.
